# EUROPÄISCHE PATENTANMELDUNG

(11) **EP 2 317 244 A1**
(43) Veröffentlichungstag der Anmeldung: **04.05.2011**
(21) Anmeldenummer: 09405187.7
(22) Anmeldetag: 27.10.2009
(51) Int. Cl.: F24J 2/52, H01L 31/042

(54) **In-Dach-Montagesystem für Solarmodule**

(71) Anmelder: Reich + Nievergelt AG, 8002 Zürich (CH)
(72) Erfinder: Folta, Enrico, 06295 Eisleben OT Sittichenbach (DE)
(74) Vertreter: Clerc, Natalia

(57) **Zusammenfassung**

Es wird eine Vorrichtung für die In-Dach-Montage angegeben, welche zumindest zwei Solarzellenmodule (2) mit jeweils einem Rahmen (20) und mindestens einem im Rahmen (20) gehaltenen Solarlaminat (270) mit Solarzellen umfasst. Der Rahmen (20) weist vier miteinander verbundene Rahmenelemente (200a, 200b, 280, 290) auf, von denen zumindest ein Rahmenelement (200) eine nach aussen hin abstehende Aufnahmeschiene (207) hat. Die Vorrichtung umfasst ausserdem zumindest eine Verbindungsschiene (30), die in die Aufnahmeschienen (207) zweier benachbarter Solarzellenmodule (2) einlegbar ist, um zwei Solarzellenmodule (2) miteinander zu verbinden. Die Verbindungsschiene (30) ist mittels eines Befestigungsmittels (34) direkt mit einer Dachlatte (1) verbindbar, um zwei benachbarte Solarzellenmodule (2) an einem Dach zu befestigen. Dabei ist die Aufnahmeschiene (207), wenn die Vorrichtung in einer vorgesehenen Weise auf einer Dachfläche aufliegt, in einem oberen, der Dachfläche abgewandten Bereich des Rahmenelementes (200, 280, 290) angeordnet.

## Beschreibung

### TECHNISCHES GEBIET

Die vorliegende Erfindung betrifft eine Vorrichtung tür die In-Dach-Montage, welche zumindest zwei Solarzellenmodule mit jeweils einem Rahmen und mindestens einem darin gehaltenen Solarlaminat umfasst. Der Rahmen weist jeweils zumindest eine nach aussen hin abstehende Aufnahmeschiene auf. Um zwei Solarzellenmodule miteinander zu verbinden und an einem Dach zu befestigen, ist eine Verbindungsschiene in die Aufnahmeschienen zweier benachbarter Rahmen einlegbar und mit einem Befestigungsmittel mit einer Dachlatte verbindbar.

### STAND DER TECHNIK

Seit längerem ist die Montage von Solarzellen- bzw. Photovoltaiksystemen auf Hausdächern bekannt, um insbesondere der Sonne zugewandte Flächen von Dächern zur Energiegewinnung zu nutzen. Dabei wird die Energie des Sonnenlichts in einer an sich bekannten Art und Weise mittels Solarzellen in elektrische Energie umgewandelt. Die elektrische Energie kann dadurch umweltfreundlich, unabhängig vom öffentlichen Versorgungsnetz und kostengünstig hergestellt werden.

Die Montage der Solarzellen auf einem Dach kann auf unterschiedlichste Art und Weise vorgenommen werden, wobei die Montageart abhängig von der Dachart ist. Dabei kann es sich insbesondere um ein Flach- oder ein Schrägdach handeln. Im Falle eines Schrägdaches ist es beispielsweise möglich, die Solarzellen mittels einer entsprechenden Halterung über bzw. auf der Dachdeckung oder Dachhaut, welche meist durch Ziegel gebildet ist, zu montieren. Eine wesentlich ästhetischere und deshalb im Allgemeinen bevorzugte Montageart ist allerdings die In-Dach-Montage, welche sich dadurch kennzeichnet, dass die Solarzellenmodule in die Dachhaut integriert werden. Die Solarzellenmodule ersetzen also einen Teil der Ziegel des Daches und übernehmen dabei deren Funktion. Die Solarzellen liegen bei einer solchen In-Dach-Montage üblicherweise in der Form von Solarzellenmodulen auf Dachlatten auf und sind an diesen befestigt, wobei ein Solarzellenmodul im Wesentlichen aus dem Solarlaminat mit den Solarzellen und einem Rahmen besteht, in dem das Solarlaminat gehalten ist.

Eine Vielzahl von Schwierigkeiten und Herausforderungen sind bei der Montage von Solarzellen auf Dächern zu beachten, welche insbesondere bei der In-Dach-Montage oft noch verstärkt werden. So stellen beispielsweise Witterungseinflüsse eine grosse Herausforderung dar. Die Solarzellen und deren Montageeinrichtungen müssen einen grossen Temperaturbereich tolerieren können und auch zum Beispiel starken Wind, hohe Schneelasten oder Hagel aushalten. Ein wichtiges Erfordernis von In-Dach-Systemen ist auch deren Dichtigkeit in Bezug auf Regenwasser. Weiters muss eine gute Luftzirkulation zu den Solarzellen gewährleistet sein, um eine übermässige Erwärmung der Solarzellen zu verhindern, was zu einer Leistungsverminderung und einer Lebensdauerverkürzung führen kann. Weitere wichtige Kriterien von Solarzellen-Montagesystemen sind ausserdem eine möglichst einfache Handhabung bei der Installation sowie eine kostengünstige Herstellung.

In US 5,338,369 ist ein In-Dach-Montagesystem für Photovoltaikmodule offenbart, bei dem die Module jeweils mit Verbindungsstrukturen ausgestattete Seitenelemente aufweisen. Die Verbindungsstrukturen der Seitenelemente zweier benachbarter Module lassen sich formschlüssig miteinander verbinden und mit einem Befestigungsmittel am Dach festmachen. Nachteilig bei diesem Montagesystem wirkt sich aus, dass die Module über das Befestigungsmittel direkt und fest mit dem Dach verbunden sind, wodurch die Module kaum Spiel für beispielsweise temperaturbedingte Veränderungen ihrer Ausdehnung haben. Dies kann zu Beschädigungen der Solarzellen und einer schleichend auftretenden Lockerung der Montage der Solarzellen am Dach führen. Ausserdem sind bei diesem Montagesystem die am seitlichen Rand verwendeten Abschlusselemente, welche zur Verbindung der seitlichen Module zum Dach dienen, jeweils unterschiedlich zueinander ausgestaltet, was die Herstellung des Systems verteuert.

WO 01/75377 zeigt in Montagesystem, bei dem die seitlichen Rahmenelemente der Solarzellenmodule jeweils einen nach oben ragenden Vorsprung aufweisen, der eine zum Modulinnern hingerichtete Nut bildet. Durch eine klammerartige Verbindungsschiene, die in diese Nut eingreift, können zwei Module miteinander verbunden werden. Die in diesem System verwendeten Rahmenelemente sind jedoch verhältnismässig aufwendig in der Herstellung. Ausserdem muss der Rahmen zur Verbindung mit dem Dach in vorgängig montierte Verbindungselemente eingeschoben werden, was eine verhältnismässig komplizierte Installation bedeutet. Ein ähnliches System ist in der WO 92/21152 beschrieben.

JP 10-159284 zeigt eine Montage-Vorrichtung, bei der die Solarzellen in einem Rahmen gehalten werden, der aus Profilschienen besteht. Die seitlichen Profilschienen eines Moduls grenzen jeweils an eine Befestigungsschiene an, welche mittels einer Schraube mit einer Dachlatte verbunden ist. Zur Verbindung zweier benachbarter Solarzellenmodule miteinander und zur Befestigung der Module am Dach, wird eine Verbindungsschiene in seitliche, über die Befestigungsschiene hervorragende Nuten der beiden Profilschienen eingelegt und durch eine Schraube mit einem Gegenstück an der Befestigungsschiene festgemacht. Die Installation der Solarzellenmodule ist dadurch verhältnismässig kompliziert und aufwendig, da zuerst die Befestigungsschienen am Dach und dann die Solarzellenmodule an den Befestigungsschienen festgemacht werden müssen.

WO 2005/091854 beschreibt eine einfache Vorrichtung, bei der die Rahmenelemente der Solarzellenmodule jeweils untere, nach aussen hin vorstehende Aufnahmeschienen aufweisen, in welche eine Verbindungsschiene einlegbar ist, um zwei Solarzellenmodule miteinander zu verbinden. Die Verbindungsschiene ist dann mittels einer Schraube direkt mit dem Dach verbindbar. Nachteilig wirkt sich hier jedoch die schlechte Zugänglichkeit der Verbindungsschiene aus, welche bei der Installation umständlich von der Seite her eingeschoben werden muss. Ausserdem sind die Öffnungen zwischen den einzelnen Solarzellenmodulen unästhetisch und für Schmutz zugänglich.

### DARSTELLUNG DER ERFINDUNG

Es ist eine Aufgabe der vorliegenden Erfindung, eine Vorrichtung für die In-Dach-Montage anzugeben, mit der Solarzellen auf möglichst einfache Art und Weise auf einem Dach installierbar sind, wobei insbesondere die oben genannten Nachteile behoben werden sollen.

Diese Aufgabe wird durch eine Vorrichtung mit den Merkmalen des Anspruchs 1 gelöst. Weitere Ausführungsformen sind in den abhängigen Ansprüchen angegeben.

Die vorliegende Erfindung stellt also eine Vorrichtung für die In-Dach-Montage zu Verfügung, welche die folgenden Merkmale aufweist:
zumindest zwei Solarzellenmodule mit jeweils einem Rahmen und mindestens einem im Rahmen gehaltenen Solarlaminat mit Solarzellen, wobei der Rahmen vier miteinander verbundene Rahmenelemente umfasst, von denen zumindest ein Rahmenelement eine vom Solarzellenmodul nach aussen hin abstehende Aufnahmeschiene aufweist; und
zumindest eine Verbindungsschiene, die in die Aufnahmeschienen zweier benachbarter Solarzellenmodule einlegbar ist, um zwei Solarzellenmodule miteinander zu verbinden. Die Verbindungsschiene ist mittels zumindest eines ersten Befestigungsmittels mit einer Dachlatte verbindbar, um zwei benachbarte Solarzellenmodule an einem Dach zu befestigen.

Dabei ist die Aufnahmeschiene, wenn die Vorrichtung in bestimmungsgemässer Weise auf einer Dachfläche aufliegt, in einem oberen, der Dachfläche abgewandten Bereich des Rahmenelements angeordnet.

Unter einer In-Dach-Montage wird eine Montage verstanden, welche einen Teil der Dachhaut, insbesondere die Ziegel, ersetzt und dabei dessen Funktion übernimmt. Unter einem Solarlaminat wird die Einheit von Solarzellen und gegebenenfalls Schutzelemente wie Folien und Glasscheiben oder andere Abdeckungen verstanden. Das Solarzellenmodul beinhaltet mindestens ein derartiges Solarlaminat und einen dieses mindestens eine Laminat mindestens teilweise umlaufenden Rahmen. Das hier beschriebene erste Befestigungsmittel ist bevorzugt einstückig ausgebildet, wobei es sich insbesondere um eine Schraube handeln kann.

Indem die Aufnahmeschiene in einem oberen, der Dachfläche abgewandten Bereich des Rahmenelements und bevorzugt beabstandet zur Dachfläche angeordnet ist, ist die Verbindungsschiene und das erste Befestigungsmittel bei der Montage der Vorrichtung besser zugänglich. Dies erleichtert insbesondere auch später nötige Manipulationen an der Vorrichtung wie zum Beispiel Reparaturen von Solarzellenmodulen erheblich. Ausserdem kann durch diese Anordnung der Aufnahmeschiene kein oder weniger Schmutz zwischen die Solarzellenmodule gelangen.

Vorteilhaft sind zwei Solarzellenmodule durch die Verbindungsschiene wasserdicht miteinander verbindbar. Es kann dann also im Bereich der Verbindungsschiene kein Wasser zwischen die Solarzellenmodule gelangen. Die Dichtung zwischen den Solarzellenmodulen kann dadurch verbessert werden, dass in der Aufnahmeschiene und in der Verbindungsschiene jeweils Dichtungselemente vorhanden sind, um den Rahmen und die Verbindungsschiene gegeneinander abzudichten. Bei den Dichtungselementen kann es sich beispielsweise um Gummieinlagen handeln.

Bevorzugt haben zwei einander gegenüberliegende Rahmenelemente des Rahmens jeweils eine nach aussen hin abstehende Aufnahmeschiene. Die Solarzellenmodule sind dadurch zu zwei Seiten hin mit weiteren Solarzellenmodulen verbindbar.

In einer insbesondere bevorzugten Ausführungsform ist an den Rahmenelementen des Rahmens, welche eine Aufnahmeschiene aufweisen, zudem eine nach aussen hin abstehende Befestigungsleiste vorhanden. Diese Befestigungsleiste ist vorteilhaft am Rahmenelement in einem Bereich nahe der Dachfläche, insbesondere bevorzugt direkt anliegend an die Dachfläche, angeordnet. Die Befestigungsleiste kann vorteilhaft jeweils mittels zumindest eines zweiten Befestigungsmittels an einer Dachlatte befestigbar sein, wobei das zweite Befestigungsmittel bevorzugt eine Schraube ist, welche sich durch die Befestigungsleiste hindurch erstreckt. Eine Befestigung der Vorrichtung am Dach erfolgt dadurch insbesondere entlang des äusseren Randes der Vorrichtung auf eine besonders einfache Art und Weise.

Bevorzugt führen die Befestigungsleisten zweier benachbarter Solarzellenmodule das erste Befestigungsmittel beim Verbinden der Verbindungsschiene mit einer Dachlatte seitlich. Die Befestigungsleisten verhindern also seitlich eine nicht optimale und insbesondere schräg angebrachte Verbindung einer Dachlatte mit der Verbindungsschiene durch das erste Befestigungsmittel. Diese Führung mittels der unteren Befestigungsleisten lassen sich auch bei anderen Vorrichtungen ohne oder mit einer anders geformten Verbindungsschiene einsetzen.

Dabei können die Aufnahmeschiene und die Befestigungsleiste eines Rahmenelementes jeweils gleich weit nach aussen hin abstehen. Dies ist vorteilhaft, weil das erste Befestigungsmittel dadurch an zwei Stellen seitlich geführt ist, wodurch die seitliche Lage des ersten Befestigungsmittels bei der Verbindung einer Dachlatte mit der Verbindungsschiene in optimaler Weise vorgegeben ist. Die Aufnahmeschiene und die Befestigungsleiste eines Rahmenelementes stehen dazu vorzugsweise jeweils in senkrechter Richtung vom Rahmenelement nach aussen hin ab.

Um bei der Installation eine möglichst satte Verbindung zwischen der Befestigungsleiste und einer Dachlatte mittels des zweiten Befestigungsmittels herstellen zu können, liegen die Befestigungsleisten jeweils bei Auflage des Solarzellenmoduls auf einem Dach vorteilhaft direkt auf einer Dachlatte auf. Die Befestigungsleiste ist deshalb bevorzugt am unteren Rand des Rahmenelementes angeordnet.

In einer bevorzugten Ausführungsform ist die Aufnahmeschiene im Wesentlichen auf der Höhe der Solarzelle angeordnet. Weiters kann die Verbindungsschiene eine Oberseite haben, welche auf derselben Höhe wie die Oberseite der Solarzelle zu liegen kommt, wenn die Verbindungsschiene in die Auflageschiene eingelegt ist. Dadurch wird eine besonders ästhetische Ausführung erreicht, welche auch funktional vorteilhaft ist, da Schmutz und Regenwasser über die dann im Wesentlichen ebene Fläche der Vorrichtung gut abgleiten können.

Um eine optimale Funktion der Solarzellen sicherzustellen, weisen bevorzugt zumindest zwei gegenüberliegende Rahmenelemente des Rahmens Öffnungen zur Belüftung der Solarzelle bzw. des Solarlaminats auf.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Draufsicht auf ein Dach mit einer darauf montierten, erfindungsgemässen Vorrichtung gemäss einer ersten Ausführungsform;
- Fig. 2: eine perspektivische Ansicht eines Rahmens eines Solarzellenmoduls der in Fig. 1 gezeigten Vorrichtung;
- Fig. 3: eine Seitenansicht eines giebelfernen Rahmenelementes eines Solarzellenmoduls der in Fig. 1 gezeigten Vorrichtung;
- Fig. 4: eine Seitenansicht eines giebelnahen Rahmenelements eines Solarzellenmoduls der in Fig. 1 gezeigten Vorrichtung;
- Fig. 5: eine Teilansicht eines Schnitts entlang der Linie V-V in Fig. 1 durch zwei mit einer Verbindungsschiene seitlich verbundene Solarzellenmodule;
- Fig. 6: eine Schnittansicht durch ein seitliches Rahmenelement eines Solarzellenmoduls der in Fig. 1 gezeigten Vorrichtung;
- Fig. 7: eine Schnittansicht durch eine Verbindungsschiene der in Fig. 1 gezeigten Vorrichtung;
- Fig.8: eine Schnittansicht durch ein giebelfernes Rahmenelement eines Solarzellenmoduls der in Fig. 1 gezeigten Vorrichtung;
- Fig. 9: eine Teilansicht eines Schnitts durch ein am seitlichen Rand der in Fig. 1 gezeigten Vorrichtung angeordnetes Solarzellenmodul, wobei das äussere, seitliche Rahmenelement sichtbar ist;
- Fig. 10: eine Teilansicht eines Schnitts entlang der Linie X-X in Fig. 1 durch ein am giebelfernen Rand der Vorrichtung angeordnetes Solarzellenmodul, wobei das äussere, giebelferne Rahmenelement sichtbar ist;
- Fig. 11: eine Teilansicht eines Schnitts entlang der Linie XI-XI in Fig. 1 durch die parallel zum Giebel verlaufende Verbindungsstelle zweier Solarzellenmodule;
- Fig. 12: eine Schnittansicht entlang der Linie XII-XII in Fig. 1 durch die Verbindung
- Fig. 12a: eines am giebelnahen Rand der Vorrichtung angeordneten Solarzellenmoduls mit dem Dach; eine Detailansicht des in Fig. 12 gestrichelt gekennzeichneten, rechteckigen Bereichs; sowie
- Fig. 13: eine Schnittansicht entlang der Linie XIII-XIII in Fig. 1 durch die Verbindung eines am giebelfernen Rand angeordneten Solarzellenmoduls mit dem Dach.

### BESCHREIBUNG BEVORZUGTER AUSFÜHRUNGSFORMEN

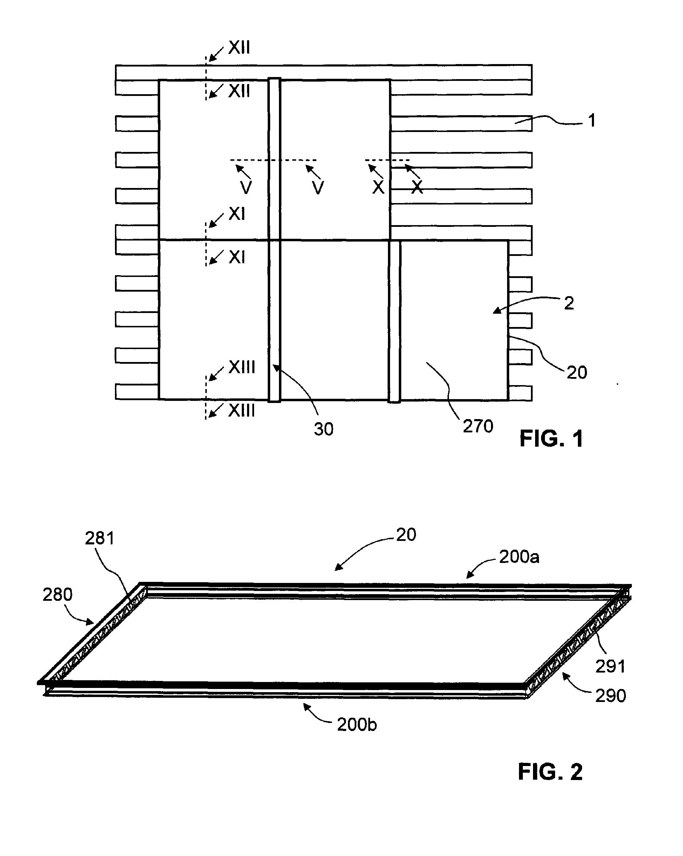

In den Figuren 1 bis 13 ist eine bevorzugte Ausführungsform einer erfindungsgemässen Vorrichtung für die In-Dach-Montage von Solarzellen gezeigt. Die Vorrichtung umfasst eine Mehrzahl von Solarzellenmodulen 2, welche seitlich mittels Verbindungsschienen 30 miteinander verbunden und an einem Dach befestigt sind.

In Figur 1 ist eine derartige Vorrichtung für die In-Dach-Montage von Solarzellen gezeigt, aufweisend fünf miteinander verbundene, im Wesentlichen rechteckige Solarzellenmodule 2. Die gesamte Vorrichtung ist an mehreren Dachlatten 1 eines Hausdachs befestigt. Bei dem Dach kann es sich insbesondere um ein Schräg- oder Giebeldach handeln, wobei der Giebel in der Draufsicht der Figur 1 oben im Bild ist. Die einzelnen Solarzellenmodule 2 sind seitlich, also an ihren sich in senkrechter Richtung zum Giebel erstreckenden Seiten, mittels Verbindungsschienen 30 miteinander verbunden. Die Solarzellenmodule 2 weisen jeweils einen Rahmen 20 auf, in welchen Ein Solarlaminat 270 mit Solarzellen gehalten ist. Ein Solarlaminat 270 kann dabei aus einer Vielzahl von einzelnen funktionalen Solarlaminaten bzw. Solarzelleneinheiten bestehen, also insgesamt ein Solarzellenfeld darstellen. Die Solarzellenmodule 2 und die Verbindungsschienen 30 sind jeweils mit den Dachlatten 1 verbunden und an diesen befestigt. Die Dachlatten 1, welche einen Teil des Daches darstellen, verlaufen jeweils in paralleler Richtung zum Giebel des Schrägdaches. Die gesamte Vorrichtung umfasst hier zwei giebelnahe Solarzellenmodule 2 soweit drei, angrenzend dazu angeordnete, giebelferne Solarzellenmodule 2. Die Solarzellenmodule 2 liegen direkt auf den Dachlatten 1 auf und ersetzen somit die normalerweise zur Abdeckung des Daches verwendeten Ziegel.

Jedes Solarzellenmodul 2 weist einen Rahmen 20 auf, welcher zur Halterung des Solarlaminats 270 dient. Ein solcher Rahmen 20 ist in Figur 2 dargestellt. Der Rahmen 20 besteht in diesem Ausführungsbeispiel aus zwei gegenüberliegenden seitlichen Rahmenelementen 200a und 200b, einem giebelfernen Rahmenelement 280 sowie einem giebelnahen Rahmenelement 290. Die vier Rahmenelemente 200a, 200b, 280 und 290 sind jeweils an ihren Enden miteinander verbunden, so dass sie zusammen einen im Wesentlichen rechteckigen Rahmen 20 bilden. Während die beiden seitlichen Rahmenelemente 200a, 200b hier strukturell identisch aufgebaut sind, sind das giebelferne Rahmenelement 280 und das giebelnahe Rahmenelement 290 unterschiedlich ausgebildet. Auf die jeweilige detaillierte Ausgestaltung der Rahmenelemente wird weiter unten noch näher eingegangen. Die Rahmenelemente 200a, 200b, 280 und 290 sind jeweils als ganzes einstückig ausgebildet und sind bevorzugt aus einem wetterfesten, kostengünstigen, leichtem und leicht verarbeitbarem Material hergestellt. Dabei kann es sich insbesondere um Aluminium handeln. Insbesondere sind die Rahmenelemente 200a, 200b, 280, 290 als Profilschienen ausgebildet, deren Querschnittsform sich in diesem Ausführungsbeispiel über einen Grossteil ihrer Längenausdehnung nicht verändert.

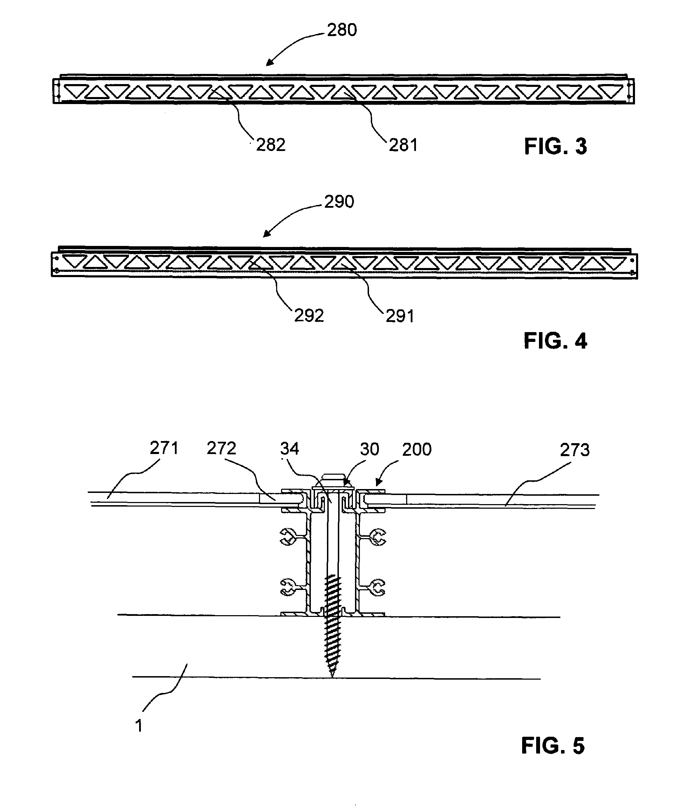

In den Figuren 3 und 4 sind Seitenansichten eines giebelfernen Rahmenelementes 280 sowie eines giebelnahen Rahmenelementes 290 gezeigt. Beide Rahmenelemente 280 und 290 weisen in der vorliegenden Ausführung in ihren Seitenwänden 282 bzw. 292 Belüftungsöffnungen 281 bzw. 291 auf. Diese sind in regelmässigen Abständen entlang der gesamten Länge der Rahmenelemente 280 und 290 ausgebildet. Die Belüftungsöffnungen 281 und 291 sind hier als gleichschenklige Dreiecke geformt, welche abwechselnd um 180 Grad verdreht zueinander sind. Die Belüftungsöffnungen 281 und 291 erlauben eine freie Luftzirkulation unter das Solarlaminat 270, welche im oberen Bereich des Rahmens 20, insbesondere oberhalb der Belüftungsöffnungen 281 und 291, gehalten sind. Die Luftzirkulation findet insbesondere vom giebelfernen Ende eines Solarzellenmoduls 2 zu dessen giebelnahem Ende hin statt. Dabei strömt die unterhalb des Solarlaminats 270 erwärmte Luft aufgrund ihrer thermischen Ausdehnung nach oben zum Giebel hin weg und wird dabei vom giebelfernen Ende des Solarzellenmoduls 2 her durch nachströmende, kühlere Luft ersetzt. Zur Verbindung mit den seitlichen Rahmenelementen 200a und 200b weisen die Rahmenelemente 280 und 290 an ihren Enden jeweils zwei Bohrungen auf.

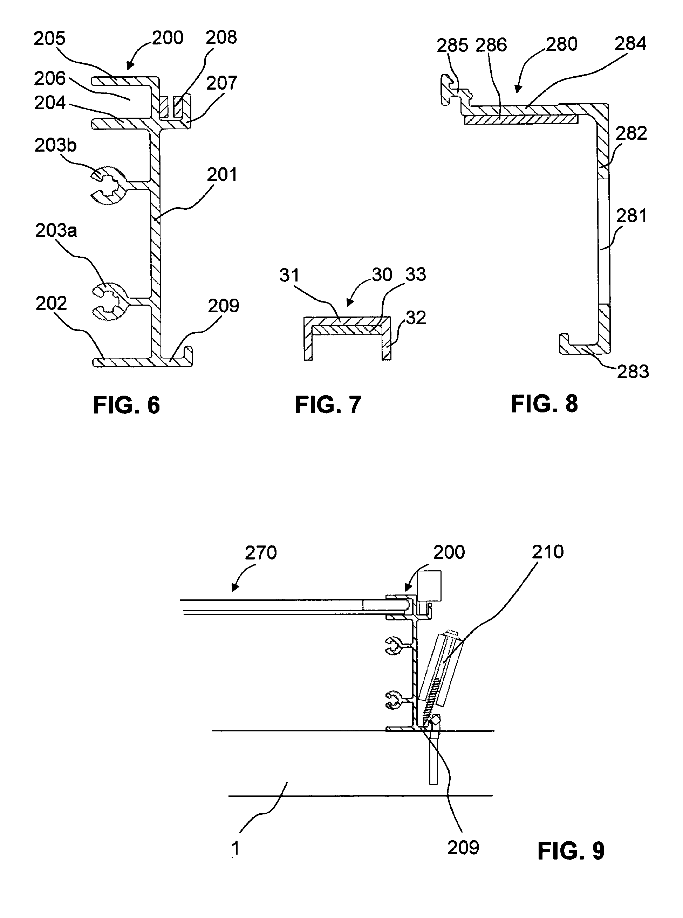

In Figur 5 ist die seitliche, also in senkrechter Richtung zum Giebel verlaufende Verbindung von zwei Solarzellenmodulen 2 in einer Schnittdarstellung gezeigt. Es sind dabei insbesondere die Profile von zwei parallel zueinander verlaufenden, seitlichen Rahmenelementen 200 sichtbar, welche den Rahmenelementen 200a und 200b von zwei einander benachbarten Solarzellenmodulen 2 entsprechen. In beiden Rahmenelementen 200 ist je ein Solarlaminat 270 gehalten. Das Solarlaminat 270 umfasst jeweils die Solarzellen, einen Energiewandler 273, ein auf diesem aufgelegtes Frontglas 271 sowie eine Einfassung 272. Der Energiewandler 273 dient zur Umwandlung von Sonnenlicht in elektrische Energie in einer dem Fachmann bekannten Art und Weise. Die Profile des seitlichen Rahmenelementes 200 und der Verbindungsschiene 30 sind jeweils im Detail in den Figuren 6 und 7 gezeigt.

Das Profil des seitlichen Rahmenelementes 200 weist in dieser als Beispiel dienenden, erfindungsgemässen Ausführungsform einen geradlinigen, vertikalen Hauptabschnitt 201 auf, mit dem eine Vielzahl von rechtwinklig dazu abstehenden Elementen einstückig verbunden ist. Am oberen Ende des Hauptabschnittes 201 sind parallel und beabstandet zueinander eine untere Haltelippe 204 sowie eine obere Haltelippe 205 ausgebildet. Diese begrenzen eine dazwischen liegende Haltenut 206, welche zur Aufnahme eines Solarlaminats 270 dient. Die Haltenut 206 ist somit zum Inneren des Solarzellenmoduls 2 hin gerichtet. Auf der gegenüberliegenden Seite der Haltenut 206, also vom Solarzellenmodul 2 nach aussen gerichtet, ist eine Aufnahmeschiene 207 ausgebildet. Diese Aufnahmeschiene 207 steht auf der Höhe der unteren Haltelippe 204 rechtwinklig vom Hauptabschnitt 201 nach aussen hin ab. Neben einem rechtwinklig vom Hauptabschnitt 201 abstehenden ersten Abschnitt weist die Aufnahmeschiene 207 einen sich rechtwinklig zum ersten Abschnitt erstreckenden zweiten Abschnitt auf, der sich parallel zum Hauptabschnitt 201 nach oben hin erstreckt. Der genannte zweite Abschnitt der Aufnahmeschiene 207 erstreckt sich jedoch geringfügig weniger weit nach oben hin als der Hauptabschnitt 201. Die Aufnahmeschiene 207 bildet also eine von oben her zugängliche Aufnahmenut. Innerhalb der Aufnahmeschiene 207 sind Dichtungselemente 208 angeordnet. Dabei kann es sich beispielsweise um Gummieinlagen handeln, welche parallel zum Hauptabschnitt 201 an den inneren Seitenwänden der Aufnahmeschiene 207 einander gegenüberliegend angeordnet sind.

Am unteren Ende des Hauptabschnitts 201 des seitlichen Rahmenelementes 200 erstreckt sich rechtwinklig ein zum Inneren des Solarzellenmoduls 2 hin weisender Fuss 202. Dieser erstreckt sich hier gleichweit zum Inneren des Solarzellenmoduls 2 hin wie die untere Haltelippe 204 und die obere Haltelippe 205. Auf der direkt gegenüberliegenden Seite des Fusses 202 erstreckt sich eine Befestigungsleiste 209 am unteren Ende des Hauptabschnittes 201 rechtwinklig nach aussen hin. Die Befestigungsleiste 209 ist im Wesentlichen identisch zur Aufnahmeschiene 207 ausgestaltet, wobei sich jedoch der parallel zum Hauptabschnitt 201 erstreckende Abschnitt bei der Befestigungsleiste 209 weniger weit nach oben hin erstreckt. Das seitliche Rahmenelement 200 kann als ganzes derart auf eine ebene Oberfläche gestellt werden, dass der Fuss 202 und die Befestigungsleiste 209 mit jeweils ihrer Unterseite auf der Oberfläche aufliegen.

Zwischen der unteren Haltelippe 204 und dem Fuss 202 sind zwei rechtwinklig vom Hauptabschnitt 201 abstehende Kanäle 203a und 203b angeordnet. Diese Kanäle 203a, 203b dienen einerseits dazu, die mechanische Stabilität des seitlichen Rahmenelementes 200 zu verbessern. Andererseits können die Kanäle 203a und 203b an den beiden Enden des seitlichen Rahmenelementes 200 mit Innengewinden versehen sein, um eine Schraubverbindung mit dem giebelfernen Rahmenelement 280 bzw. dem giebelnahen Rahmenelement 290 herzustellen.

Das detaillierte Profil einer Verbindungsschiene 30 ist in Figur 7 gezeigt. Dieses Profil weist hier einen horizontalen Hauptabschnitt 31 auf, an dessen Enden sich jeweils Schenkel 32 rechtwinklig nach unten hin erstrecken. Dieses Profil der Verbindungsschiene 30 ist entlang ihrer gesamten Längenausdehnung unverändert. In der Verbindungsschiene 30 kann ein Dichtungselement 33 angeordnet sein. Bei diesem kann es sich um eine Gummieinlage handeln, welche auf der Innenseite der Verbindungsschiene 30 am Hauptabschnitt 31 anliegt.

Zwei benachbarte Solarzellenmodule 2 werden nun, wie in Figur 5 ersichtlich, derart miteinander verbunden, dass eine Verbindungsschiene 30 mit den beiden Schenkeln 32 voran in die beiden parallel zueinander verlaufenden Aufnahmeschienen 207 der beiden benachbarten seitlichen Rahmenelemente 200 eingelegt wird. Die Oberseite des Hauptabschnittes 31 der in die Aufnahmeschienen 207 eingelegten Verbindungsschiene 30 kommt dabei auf derselben Höhe zu liegen wie die Oberseite der oberen Haltelippe 205 der seitlichen Rahmenelemente 200. Der Abstand zwischen den beiden seitlichen Rahmenelementen 200 wird dabei derart gewählt, dass die in die beiden Aufnahmeschienen 207 eingelegte Verbindungsschiene 30 in beide Richtungen zu den seitlichen Rahmenelementen 200 hin ein gewisses Spiel hat. Auf der Höhe der Dachlatten 1 wird die Verbindungsschiene 30 jeweils mit einer Schraube 34 fest mit einer Dachlatte 1 verbunden. Die Schraube 34 erstreckt sich dabei zentral durch den Hauptabschnitt 31 der Verbindungsschiene 30 hindurch in senkrechter Richtung zwischen den beiden seitlichen Rahmenelementen 200 bis zur Dachlatte 1 hin und in diese hinein. Durch das Einschrauben der Schraube 34 in die Dachlatte 1 werden die Verbindungsschiene 30 und mit dieser die seitlichen Rahmenelemente 200 zur Dachlatte 1 hingezogen und somit an dieser befestigt. Durch die von den jeweiligen Hauptabschnitten 201 der beiden seitlichen Rahmenelemente 200 abstehenden Befestigungsleisten 209 ist der seitliche Spielraum der Schraube 34 beim Einschrauben begrenzt. Die Schraube 34 wird beim Einschrauben also durch die beiden Befestigungsleisten 209 seitlich geführt, wodurch ein schräges Einschrauben der Schraube 34 in die Dachlatte 1 verhindert wird. Dadurch, dass die in den beiden Aufnahmeschienen 207 eingelegte Verbindungsschiene 30 zwischen den beiden seitlichen Rahmenelementen 200 ein gewisses Spiel zur Seite hin aufweist, sind geringfügige Verschiebungen der seitlichen Rahmenelemente 200, beispielsweise aufgrund einer temperaturbedingten Ausdehnung der Solarzelle, des Solarlaminats 270 und/oder des Rahmens 20, unproblematisch. Die Verbindungsschiene 30 dient also dazu, zwei Solarzellenmodule 2 seitlich miteinander zu verbinden und an den Dachlatten 1 zu befestigen.

Das Profil eines giebelfernen Rahmenelementes 280 des Solarzellenmoduls 2 der vorliegenden Ausführungsform ist in Figur 8 im Detail dargestellt. Senkrecht von einem geraden, vertikalen Hauptabschnitt 282, welcher die Seitenwand des Rahmenelementes 280 bildet, erstreckt sich an dessen unterem Ende eine Befestigungsleiste 283 vom Solarzellenmodul 2 nach aussen hin. Ebenso wie die Befestigungsleiste 209 des seitlichen Rahmenelementes 200 weist die Befestigungsleiste 283 hier einen kurzen, sich nach oben hin erstreckenden, parallel zum Hauptabschnitt 281 verlaufenden Abschnitt auf. Die Befestigungsleiste 283 dient auch als Fuss des giebelfernen Rahmenelementes 280. Der Hauptabschnitt 282 ist in Längsrichtung des Rahmenelementes 280 an mehreren Stellen durch Belüftungsöffnungen 281 unterbrochen. Am oberen Ende des Hauptabschnittes 282 erstreckt sich in senkrechter Richtung von diesem eine Auflagefläche 284 nach aussen hin. An ihrem äusseren Ende ist die Auflagefläche 284 durch einen nach oben ragenden Stopper 285 abgeschlossen. Ein Dichtungselement 286, welches als eine Gummieinlage ausgebildet sein kann, ist an einer Unterseite der Auflagefläche 284 angeordnet.

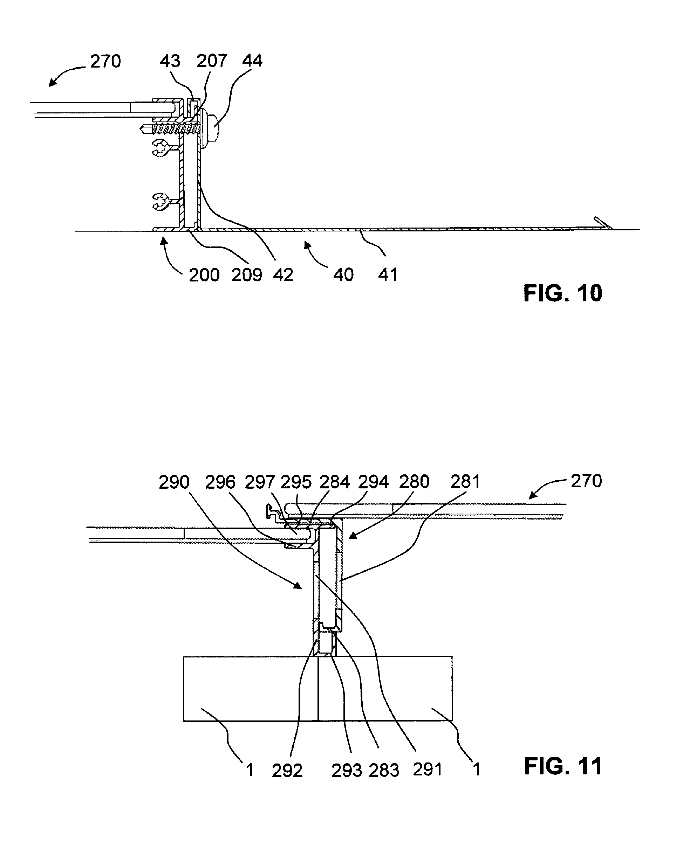

Das Profil eines giebelnahen Rahmenelementes 290 dieser Ausführungsform weist, wie in Figur 11 ersichtlich, einen geraden, vertikalen Hauptabschnitt 292 auf, der die Seitenwand des Rahmenelementes 290 bildet und der entlang der Längsausdehnung des Rahmenelementes 290 durch Belüftungsöffnungen 291 unterbrochen ist. Am unteren Ende des Hauptabschnittes 292 erstreckt sich in senkrechter Richtung eine Befestigungsleiste 293 vom Rahmen 20 nach aussen hin. Die Befestigungsleiste 293 weist einen ersten, sich in senkrechter Richtung zum Hauptabschnitt 292 erstreckenden ersten Abschnitt auf, sowie einen parallel zum Hauptabschnitt 292 verlaufenden, zweiten Abschnitt. Dieser zweite Abschnitt ist dabei geringfügig länger ausgebildet als der erste Abschnitt der Befestigungsleiste 293. Auf der gegenüberliegenden Seite der Befestigungsleiste 293 erstreckt sich am oberen Ende des Hauptabschnittes 292 eine obere Haltelippe 295 in senkrechter Richtung zum Inneren des Solarzellenmoduls 2 hin. Parallel darunter und etwas beabstandet dazu ist eine untere Haltelippe 296 ausgebildet. Die obere Haltelippe 295 und die untere Haltelippe 296 begrenzen eine dazwischen liegende Haltenut 297, welche zur Aufnahme eines Solarlaminats 270 dient. Ebenfalls am oberen Ende des Hauptabschnitts 292 erstreckt sich auf der gegenüberliegenden Seite der oberen Haltelippe 296 ein äusserer Vorsprung 294 nach aussen hin. Die obere Haltelippe 295 und der äussere Vorsprung 294 haben jeweils Oberseiten, welche gemeinsam eine ebene Auflagefläche des giebelnahen Rahmenelementes 290 bilden.

Die Befestigung eines äusseren, seitlichen Rahmenelementes 200 eines am Rand der Vorrichtung angeordneten Solarzellenmoduls 2 an einer Dachlatte 1 ist in Figur 9 gezeigt. Dabei wird eine Schraube 210 durch die auf der Dachlatte 1 aufliegende Befestigungsleiste 209 des seitlichen Rahmenelementes 200 hindurch in die Dachlatte 1 hineingeschraubt. Das seitliche Rahmenelement 200 ist damit fest mit der Dachlatte 1 verbunden. Diese Befestigungsart muss sich aber nicht auf die am Rand der Vorrichtung angeordneten, äusseren Rahmenelemente 200 beschränken. Sie kann auch in Kombination mit der in Figur 5 gezeigten Befestigungsart zwischen zwei benachbarten seitlichen Rahmenelementen 200 angewandt werden. Die Befestigungsleiste 209 des seitlichen Rahmenelementes 200 dient dann also gleichzeitig dazu, um einerseits das seitliche Rahmenelement 200 mittels der Schraube 210 mit der Dachleiste direkt zu verbinden, und andererseits um die sich durch die Verbindungsschiene 30 hindurch erstreckende Schraube 34 seitlich zu fuhren.

Um insbesondere die Dichtung am seitlichen Rand der Vorrichtung sicher zu stellen, aber auch um einen ästhetischen Abschluss zur Seite hin zu schaffen, kann das seitliche Rahmenelement 200, welches, wie in Figur 9 gezeigt, mittels Schrauben 210 mit den Dachlatten 1 verbunden ist, mit einem seitlichen Abschlussblech 40, wie in Figur 10 gezeigt, verbunden sein. Das seitliche Abschlussblech 40 weist eine sich nach aussen hin erstreckende Auflagefläche 41 zur Auflage von Ziegeln auf, sowie einen sich dazu in senkrechter Richtung erstreckenden Verbindungsabschnitt 42. Am oberen Ende des Verbindungsabschnittes 42 ist eine Haltelippe 42 ausgebildet, welche in die Aufnahmeschiene 207 des seitlichen Rahmenelementes 200 eingreift. Der Verbindungsabschnitt 42 des seitlichen Abschlussbleches 40 liegt dabei bündig an der Befestigungsleiste 209 und der Aufnahmeschiene 207 an. Das seitliche Abschlussblech 40 wird mittels einer Schraube 44 im Bereich unterhalb der Haltelippe 43 mit dem seitlichen Rahmenelement 200 verbunden.

Figur 11 zeigt die in dieser Ausführungsform verwendete Verbindungsart zweier Solarzellenmodule 2, welche in Bezug zur Dachneigung übereinander angeordnet sind. Es sind also ein giebelnahes Rahmenelement 290 und ein giebelfernes Rahmenelement 280 angrenzend aneinander gezeigt. Die Bezeichnungen "giebelnah" und "giebelfern" der Rahmenelemente 280 und 290 beziehen sich hier jeweils auf ein einzelnes Solarzellenmodul 2. Die in Figur 11 im Schnitt gezeigte Verbindungsstelle verläuft parallel zum Giebel und zu den Dachlatten 1. Das Solarlaminat 270 des oberen Solarzellenmoduls 2 liegt dabei auf der Auflagefläche 284 des giebelfernen Rahmenelementes 280 auf. Durch die Neigung des Daches rutscht das Solarlaminat 270 nach unten bis sie einen Anschlag mit dem Stopper 285 bildet. Das Solarlaminat 270 des unteren Solarzellenmoduls 2 ist in der Haltenut 297 des giebelnahen Rahmenelementes 290 gehalten.

Das giebelnahe Rahmenelement 290 des unteren Solarzellenmoduls 2 wird nun derart mit dem giebelfernen Rahmenelement 280 des oberen Solarzellenmoduls 2 verbunden, dass die Auflagefläche 284 des giebelfernen Rahmenelementes 280 auf der durch den äusseren Vorsprung 294 und der oberen Haltelippe 295 gebildeten Auflagefläche des giebelnahen Rahmenelementes 290 aufliegt. Gleichzeitig liegt die Befestigungsleiste 283 auf dem sich parallel zum Hauptabschnitt 292 erstreckenden Abschnitt der Befestigungsleiste 293 des giebelnahen Rahmenelementes 290 auf. Das obere Solarzellenmodul 2 bzw. das obere Solarlaminat 270 liegt somit ziegelartig auf dem unteren Solarzellenmodul 2 bzw. dem unteren Solarlaminat 270 auf. Insbesondere wird durch diese Anordnung der beiden Laminate 270 und Module ein Abfliessen von Regenwasser über die Verbindungsstelle zwischen den beiden Solarzellenmodulen 2 hinaus ermöglicht. Eine Abdichtung zwischen dem giebelfernen Rahmenelement 280 und dem giebelnahen Rahmenelement 290 der beiden Solarzellenmodule 2 wird dabei durch das Dichtungselement 286 sichergestellt. Wie in Figur 11 ersichtlich ist, liegen die Belüftungsöffnungen 281 und 291 der beiden Rahmenelemente 280 und 290 einander gegenüber, so dass die freie Zirkulation der Luft unter den Solarlaminaten 270 gewährleistet ist.

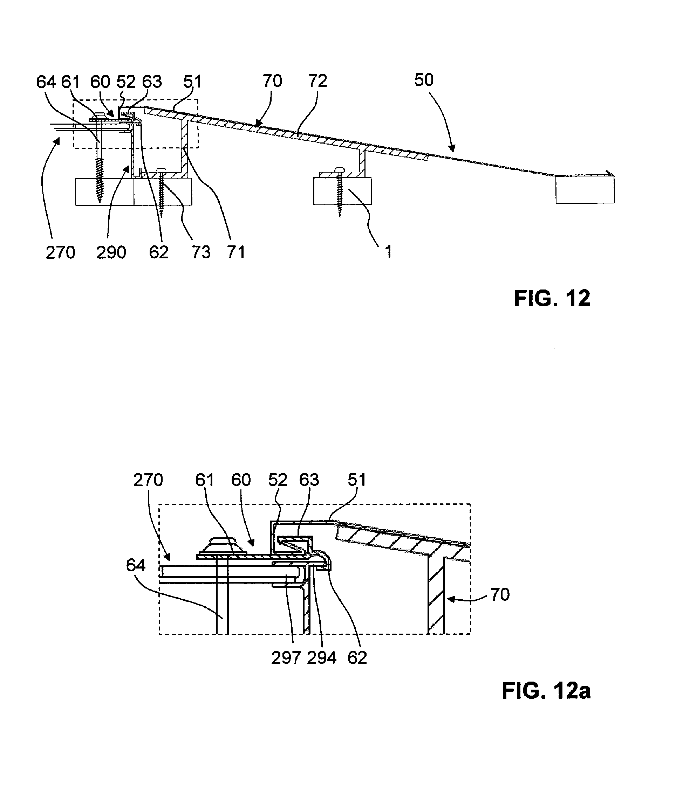

In Figur 12 ist eine beispielhafte, in dieser Ausführungsform verwendete Verbindung eines in Bezug auf die Dachneigung oberen, am Rand der Vorrichtung angeordneten Solarzellenmoduls 2 mit dem Dach dargestellt. Dazu werden ein oberes Abschlussblech 50 sowie ein Stützelement 70 benutzt. Das Stützelement 70, welches über Auflagefüsse 71 und mittels Schrauben 73 mit den Dachlatten 1 verbunden ist, ist direkt angrenzend zum giebelnahen Rahmenelement 290 des Solarzellenmoduls 2 angeordnet. Das Stützelement 70 weist eine Auflagefläche 72 auf, die sich vom giebelnahen Rahmenelement 290 her zum Giebel hin der Dachoberfläche annähert. Auf dieser Auflagefläche 72 des Stützelementes 70 liegt eine Aufliegefläche 51 des oberen Abschlussbleches 50 auf. Diese Aufliegefläche 51 ist fest mit einer Dachlatte 1 verbunden, wobei diese Verbindung indirekt über das Stützelement 70 ausgestaltet sein kann.

Das obere Abschlussblech 50 ist in dieser Ausführungsform über ein Verbindungselement 60 mit dem giebelnahen Rahmenelement 290 verbunden, was im Detail in Figur 12a gezeigt ist. Das Verbindungselement 60 weist dazu eine Haltenut 63 auf, die bei korrekter Montage des Verbindungselementes 60 oberhalb der Haltenut 297 des giebelnahen Rahmenelementes 290 zum Innern des Solarzellenmoduls 2 hin gerichtet ist. In diese Haltenut 63 greift eine Haltelippe 52 des oberen Abschlussbleches 50 ein. Eine unterhalb der Haltenut 63 ausgebildete Haltelippe 62 umgreift dabei den äusseren Vorsprung 294 des giebelnahen Rahmenelementes 290. Ein Verbindungsabschnitt 61 des Verbindungselementes 60 erstreckt sich parallel zum Solarlaminat 270 zum Innern des Solarzellenmoduls 2 hin, und wird mittels einer Schraube 64, welche sich durch den Verbindungsabschnitt 61 hindurch erstreckt, mit der Dachlatte 1 verbunden. Das Solarzellenmodul 2 ist damit fest mit dem Dach verbunden. Insbesondere wird einer in Richtung der Dachneigung nach unten gerichteten Schwerkraftkomponente des Solarzellenmoduls 2 durch den Eingriff der Haltelippe 52 in die Haltenut 63 entgegengewirkt.

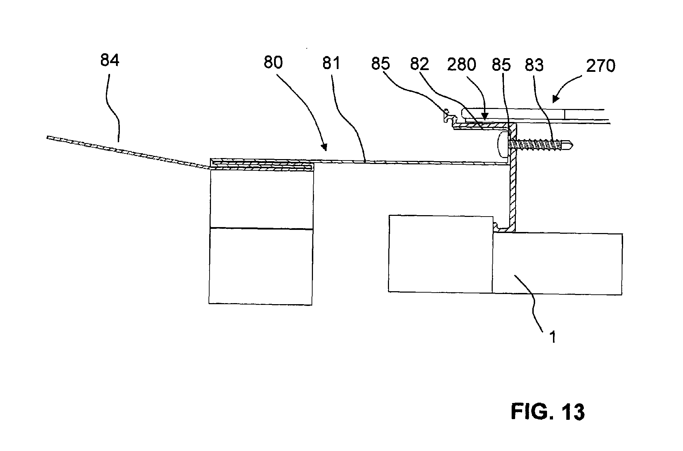

In Figur 13 ist die in Bezug auf die Dachneigung am unteren Ende der Vorrichtung ausgebildete Verbindung eines Solarzellenmoduls 2 mit dem Dach gemäss diesem Ausführungsbeispiel gezeigt. Das Solarlaminat 270 liegt dabei auf dem giebelfernen Rahmenelement 280 auf und wird durch dessen Stopper 285 vor dem Abrutschen gesichert. Der in Richtung der Dachneigung nach unten hin gerichteten Komponente der Schwerkraft des gesamten Solarzellenmoduls 2 wird dabei durch ein unteres Abschlussblech 80 entgegengewirkt. Dieses ist über einen Verbindungsabschnitt 85 mittels einer Schraube 83 fest mit dem giebelfernen Rahmenelement 280 verbunden. Vom Verbindungsabschnitt 85 aus erstreckt sich eine Auflagefläche 82 parallel zur Dachneigung vom Solarzellenmodul 2 weg. Auf dieser Auflagefläche 82 liegt die Auflagefläche 284 bzw. das Dichtungselement 286 des giebelfernen Rahmenelementes 280 auf. Parallel zur Auflagefläche 82 erstreckt sich am unteren Ende des Verbindungsabschnittes 85 ein Abstandblech 81 parallel zur Dachoberfläche nach unten hin. Das Abstandsblech 81 ist am seinem unteren, verstärkt ausgebildeten Ende fest mit einem Element des Daches, beispielsweise einer Dachlatte 1, verbunden. Am unteren Abschlussblech 80 kann ein Abtropfausleger 84 vorhanden sein, der das Abtropfen von Regenwasser über den unteren Rand eines Daches gewährleistet.

Die Erfindung ist selbstverständlich nicht auf das vorstehende Ausführungsbeispiel beschränkt, und eine Vielzahl von Abwandlungen ist möglich. So können beispielsweise die Solarzellenmodule 2 der Vorrichtung anders als in Figur 1 gezeigt und in beliebiger Weise angeordnet und miteinander verbunden sein. Auch muss sich das Profil der seitlichen Rahmenelemente 200, des giebelfernen Rahmenelementes 280 und des giebelnahen Rahmenelementes 290 nicht zwingend unverändert über deren gesamte Längenausdehnung hin erstrecken. So könnten beispielsweise die untere Haltelippe 204, die obere Haltelippe 205, der Fuss 202, aber insbesondere auch die Befestigungsleiste 209 und die Aufnahmeschiene 207 unterbrochen sein. Die Verbindungsschiene 30 könnte in einer alternativen Ausführungsform durch eine Mehrzahl kürzerer Schienen ersetzt werden. Auch kann sich die Ausgestaltung der giebelfernen Rahmenelemente 280 und der giebelnahen Rahmenelemente 290 von der vorliegenden Ausführungsform wesentlich unterscheiden. Auch die Verbindungen der Solarzellenmodule zum Dach am oberen und unteren Rand der Vorrichtung sowie die Verbindung der Module untereinander in Richtung der Dachneigung können anders als in den Figuren 11-13 gezeigt bewerkstelligt sein. Gemäss dem Stand der Technik ist eine Vielzahl von Möglichkeiten hierzu denkbar. Eine Vielzahl weiterer Abwandlungen ist möglich.

### BEZUGSZEICHENLISTE

| | | | |
|---|---|---|---|
| 1 | Dachlatte | 200 | Seitliches Rahmenelement |
| 2 | Solarzellenmodul | 201 | Hauptabschnitt |
| 20 | Rahmen | 202 | Fuss |
| 30 | Verbindungsschiene | 203a, 203b | Kanäle |
| 31 | Hauptabschnitt | 204 | Untere Haltelippe |
| 32 | Schenkel | 205 | Obere Haltelippe |
| 33 | Dichtungselement | 206 | Haltenut |
| 34 | Schraube | 207 | Aufnahmeschiene |
| 40 | Seitliches Abschlussblech | 208 | Dichtungselement |
| 41 | Aufliegefläche | 209 | Befestigungsleiste |
| 42 | Verbindungsabschnitt | 210 | Schraube |
| 43 | Haltelippe | 270 | Solarlaminat |
| 44 | Schraube | 271 | Frontglas |
| 50 | Oberes Abschlussblech | 272 | Einfassung |
| 51 | Aufliegefläche | 273 | Energiewandler |
| 52 | Haltelippe | 280 | Giebelfernes Rahmenelement |
| 60 | Verbindungselement | 281 | Belüftungsöffnungen |
| 61 | Verbindungsabschnitt | 282 | Hauptabschnitt |
| 62 | Haltelippe | 283 | Befestigungsleiste |
| 63 | Haltenut | 284 | Auflagefläche |
| 64 | Schraube | 285 | Stopper |
| 70 | Stützelement | 286 | Dichtungselement |
| 71 | Auflagefuss | 290 | Giebelnahes Rahmenelement |
| 72 | Auflagefläche | 291 | Belüftungsöffnungen |
| 73 | Schraube | 292 | Hauptabschnitt |
| 80 | Unteres Abschlussblech | 293 | Befestigungsleiste |
| 81 | Abstandsblech | 294 | Äusserer Vorsprung |
| 82 | Auflagefläche | 295 | Obere Haltelippe |
| 83 | Schraube | 296 | Untere Haltelippe |
| 84 | Abtropfausleger | 297 | Haltenut |
| 85 | Verbindungsabschnitt | | |

## Patentansprüche

1. Vorrichtung für die In-Dach-Montage, aufweisend
zumindest zwei Solarzellenmodule (2) mit jeweils einem Rahmen (20) und mindestens einem im Rahmen (20) gehaltenen Solarlaminat (270) mit Solarzellen, wobei der Rahmen (20) vier miteinander verbundene Rahmenelemente (200a, 200b, 280, 290) umfasst, von denen zumindest ein Rahmenelement (200) eine vom Solarzellenmodul (2) nach aussen hin abstehende Aufnahmeschiene (207) aufweist, und
zumindest eine Verbindungsschiene (30), die in die Aufnahmeschienen (207) zweier benachbarter Solarzellenmodule (2) einlegbar ist, um zwei Solarzellenmodule (2) miteinander zu verbinden,
wobei die Verbindungsschiene (30) mittels zumindest eines ersten Befestigungsmittels (34) mit einer Dachlatte (1) verbindbar ist, um zwei benachbarte Solarzellenmodule (2) an einem Dach zu befestigen,
**dadurch gekennzeichnet, dass**
die Aufnahmeschiene (207), wenn die Vorrichtung in bestimmungsgemässer Weise auf einer Dachfläche aufliegt, in einem oberen, der Dachfläche abgewandten Bereich des Rahmenelements (200) angeordnet ist.

2. Vorrichtung gemäss Anspruch 1, wobei zwei Solarzellenmodule (2) durch die Verbindungsschiene (30) wasserdicht miteinander verbindbar sind.

3. Vorrichtung gemäss einem der Ansprüche 1 oder 2, wobei zwei einander gegenüberliegende Rahmenelemente (200) des Rahmens (20) jeweils eine nach aussen hin abstehende Aufnahmeschiene (207) haben.

4. Vorrichtung gemäss einem der vorhergehenden Ansprüche, wobei an den Rahmenelementen (200) des Rahmens (20), welche eine Aufnahmeschiene (207) aufweisen, zudem eine nach aussen hin abstehende Befestigungsleiste (209) vorhanden ist.

5. Vorrichtung gemäss Anspruch 4, wobei die Befestigungsleiste (209) jeweils mittels zumindest eines zweiten Befestigungsmittels (210) an einer Dachlatte (1) befestigbar ist.

6. Vorrichtung gemäss einem der Ansprüche 4 oder 5, wobei die Befestigungsleisten (209) zweier benachbarter Solarzellenmodule (2) das erste Befestigungsmittel (34) beim Verbinden der Verbindungsschiene (30) mit einer Dachlatte (1) seitlich fuhren.

7. Vorrichtung gemäss einem der Ansprüche 4 bis 6, wobei die Aufnahmeschiene (207) und die Befestigungsleiste (209) eines Rahmenelementes (200) jeweils gleich weit nach aussen hin abstehen.

8. Vorrichtung gemäss einem der Ansprüche 4 bis 7, wobei die Aufnahmeschiene (207) und die Befestigungsleiste (209) eines Rahmenelementes (200) jeweils in senkrechter Richtung vom Rahmenelement (200) nach aussen hin abstehen.

9. Vorrichtung gemäss einem der Ansprüche 4 bis 8, wobei die Befestigungsleisten (209) jeweils bei Auflage des Solarzellenmoduls (2) auf einem Dach direkt auf einer Dachlatte (1) aufliegen.

10. Vorrichtung gemäss einem der vorhergehenden Ansprüche, wobei die Aufnahmeschiene (207) im Wesentlichen auf der Höhe des Solarlaminats (270) angeordnet ist.

11. Vorrichtung gemäss einem der vorhergehenden Ansprüche, wobei die Verbindungsschiene (30) eine Oberseite hat, welche auf derselben Höhe wie die Oberseite des Solarlaminats (270) zu liegen kommt, wenn die Verbindungsschiene (30) in die Auflageschiene (207) eingelegt ist.

12. Vorrichtung gemäss einem der vorhergehenden Ansprüche, wobei zumindest zwei gegenüberliegende Rahmenelemente (280, 290) des Rahmens (20) Öffnungen (281, 291) zur Belüftung des Solarlaminats (270) aufweisen.

13. Vorrichtung gemäss einem der vorhergehenden Ansprüche, wobei in der Aufnahmeschiene (207) und in der Verbindungsschiene (30) jeweils Dichtungselemente (33, 208) vorhanden sind, um den Rahmen (20) und die Verbindungsschiene (30) gegeneinander abzudichten.

14. Solarzellenmodul (2) für eine Vorrichtung gemäss einem der vorhergehenden Ansprüche.

15. Vorrichtung für die In-Dach-Montage, aufweisend
zumindest zwei Solarzellenmodule (2), welche jeweils einen Rahmen (20) und mindestens ein vom Rahmen (20) gehaltenes Solarlaminat (270) umfassen, wobei der Rahmen (20) vier miteinander verbundene Rahmenelemente (200, 280, 290) umfasst, von denen zumindest ein Rahmenelement (200) eine nach aussen hin abstehende Aufnahmeschiene (207) aufweist, und
zumindest ein Verbindungselement (30), um zwei Solarzellenmodule (2) miteinander zu verbinden,
wobei das Verbindungselement (30) mittels zumindest eines ersten Befestigungsmittels (34) mit einer Dachlatte (1) verbindbar ist, um zwei benachbarte Solarzellenmodule (2) an einem Dach zu befestigen,
**dadurch gekennzeichnet, dass**
an den Rahmenelementen (200) des Rahmens (20), welche eine Aufnahmeschiene (207) aufweisen, zudem eine nach aussen hin abstehende Befestigungsleiste (209) vorhanden ist, wobei die Aufnahmeschiene (207) in einem oberen Bereich des Rahmenelements (200) und die Befestigungsleiste (34) in einem unteren Bereich des Rahmenelements (200) angeordnet ist.
